# EUROPEAN PATENT APPLICATION

(11) **EP 4 835 342 A1**
(43) Date of publication of application: **04.11.2026**
(21) Application number: 26174728.1
(22) Date of filing: 27.04.2026
(51) Int. Cl.: F16L 55/40, H02G 1/08, G02B 6/50

(54) **DEVICE AND METHOD FOR PASSING A CABLE OR PIPE THROUGH A PASSAGE**

(30) Priority: 28.04.2025 BE 202505278
(71) Applicant: Celibel BV, 8800 Roeselare (BE)
(72) Inventor: LAMBERT, Laurent, 8800 Roeselare (BE)
(74) Representative: Brantsandpatents bv

(57) **Abstract**

A device comprising a substantially cylindrical casing (2) extending between a front side (4) and a rear side (5) along a longitudinal direction, wherein the rear side is configured for connection to an end of a pipe or cable (30), and the front side is provided with at least three wheels (12), each of which protrudes at least 30% of their diameter and at least 5 mm beyond both the radial outer circumference of the casing and the front side in the longitudinal direction. Also, a method for passing a cable or pipe through a passage (32), wherein a cylindrical body provided at the front side with at least three wheels is connected to the end of a cable or pipe, wherein each wheel protrudes at least 30%, and preferably at least 35%, of its diameter beyond the radial outer circumference of the casing and also beyond the front side in the longitudinal direction; after which the cable or pipe is inserted into the passage and pushed forward, wherein the wheels make contact with one or more inner walls so as to deflect the end in the direction of the passage.

## Description

### TECHNICAL FIELD

The invention relates to devices for guiding a cable, flexible hose, or pipe through a passage, and more specifically by connecting a device with wheels to an end of the cable, flexible hose, or pipe.

### BACKGROUND ART

Various auxiliary means exist that are intended to facilitate the passage of cables or pipes through conduits or curved passages. A frequently employed solution is the use of a smooth, streamlined guide head at the end of the cable or pipe. This guide head generally has a conical shape and prevents the end of the cable from catching on the wall of the passage. The guide head is generally attached to the end of the cable or pipe and has a diameter that is equal to or only marginally greater than that of the cable, so that the cable can slide smoothly through bends and obstacles can be overcome more easily.

For heavier or stiffer cables, pulling sleeves and pulling elements are also employed, which are attached to the cable or pipe and are provided with a rounded front end. In certain embodiments, the pulling element comprises a screw point that is inserted into the cable core for a firm anchorage, optionally enclosed by a conical sleeve that smooths the transition. These elements are specifically designed to permit a high pulling force without the cable sustaining damage or becoming lodged in the passage.

Another class of auxiliary means concerns the use of flexible front pieces such as pulling springs, helical springs, or flexible sleeves. These are attached to the front side of the cable or to a pulling wire and can gradually adapt to the direction of the passage. In some cases, a sleeve element is additionally employed that is slid over the coupling between the pulling wire and the cable, so that this transition also causes no disruption to the sliding path.

CN 209 358 156 U (CN '156) concerns a tool that is used to pull electrical cables through protective tubes. The auxiliary piece has at the front side a guiding part with friction-reducing rollers that make contact with the tube wall to reduce friction, and at the rear side a cable clamp with adjustable clamping plates and a lock nut to clamp the cable. However, the tool is cumbersome to disassemble for repair or replacement of parts. Furthermore, during use the tool quickly becomes detached from the cable or pipe or regularly catches on the inside of the protective tube.

The techniques described above are only suitable for passages with relatively low friction and without edges or protruding structures in the inner wall. Furthermore, most existing techniques require a pulling cable or pulling element to pull the cable through the passage, which increases the complexity of the operation.

The present invention seeks to provide a solution for one or more of the disadvantages mentioned above.

### SUMMARY OF THE INVENTION

In a first aspect, the invention concerns a device comprising a substantially cylindrical casing extending between a front side and a rear side along a longitudinal direction, wherein the rear side is configured for connecting to an end of a pipe or cable, and wherein the front side is provided with at least three wheels, wherein each wheel protrudes at least 30% of its diameter and at least 5 mm beyond the radial outer circumference of the casing and also beyond the front side in the longitudinal direction.

In a second aspect, the invention relates to a method for passing a cable or pipe through a passage, comprising the steps of connecting a rear side of a cylindrical body to an end of a cable or pipe, wherein the device comprises at least three wheels around an outer circumference of a front side, wherein each wheel protrudes by at least 30%, and preferably at least 35%, of its diameter beyond the radial outer circumference of the casing and likewise beyond the front side in the longitudinal direction; inserting the end of the cable or pipe into a passage; pushing the cable or pipe through the passage, wherein the wheels make contact with one or more inner walls of the passage in order to deflect the cable or pipe in a direction of the passage.

The device is particularly suitable for guiding a pipe or cable through a passage, such as a conduit, an underground pipe, a sleeve pipe, or a protective sheath. Such passages may extend over considerable lengths and often comprise bends, diameter changes, or local damage that impede the guiding of a pipe or cable. For this purpose, the device is mechanically connected at the rear side to the end of the pipe or cable, so that it forms an extension and/or an enclosure of the end thereof. The wheels at the front side of the device form, in this configuration, the only contact points between the end of the pipe or cable and the inner wall of the passage. When pushing or guiding the pipe or cable through the passage, the wheels ensure that the end thereof is easily deflected in the direction of the passage and moves along the inner wall thereof with minimal friction. The device prevents the end of the pipe or cable from catching behind irregularities, sharp bends, or narrow sections of the passage. This is particularly relevant in applications where pipes or cables are pulled or pushed over longer distances through conduits or sleeves, such as in installation engineering, underground infrastructure, industrial cabling, or inspection applications.

### DESCRIPTION OF THE FIGURES

The following description of the figures with specific embodiments of the invention is purely illustrative in nature and is not intended to limit the present invention, the application thereof, or the use thereof. In the figures, like reference numerals indicate like or corresponding parts and/or features.
FIG. 1 shows a side view of the device.
FIG. 2, 4, 5 and 6 show a perspective view of the device.
FIG. 3 shows a front view of the device.
FIG. 7 shows a rear view of the device.
FIG. 8 shows the shaft.
FIG. 9 shows the screw located in the screw hole provided in the curved side of the notch in the rounded edge.
FIG. 10 and 11 show respectively a side view and a front view of the device.
FIG. 12 illustrates a use of the device.
FIG. 13 shows the device in a passage and connected to an end of a pipe or cable.

### DETAILED DESCRIPTION

Unless otherwise defined, all terms used in the description of the invention, including technical and scientific terms, have the meaning as commonly understood by the skilled person in the technical field of the invention. For a better understanding of the description of the invention, the following terms are explicitly defined.

In a first aspect, the invention concerns a device comprising a substantially cylindrical casing extending between a front side and a rear side along a longitudinal direction, wherein the rear side is configured for connecting to an end of a pipe or cable, and wherein the front side is provided with at least three wheels, wherein each wheel protrudes at least 30% of its diameter and at least 5 mm beyond the radial outer circumference of the casing and also beyond the front side in the longitudinal direction.

The device is particularly suitable for guiding a pipe or cable through a passage, such as a conduit, an underground pipe, a sleeve pipe, or a protective sheath. Such passages may extend over considerable lengths and often comprise bends, diameter changes, or local damage that impede the guiding of a pipe or cable. For this purpose, the device is mechanically connected at the rear side to the end of the pipe or cable, so that it forms an extension and/or an enclosure of the end thereof. The wheels at the front side of the device form, in this configuration, the only contact points between the end of the pipe or cable and the inner wall of the passage. When pushing or guiding the pipe or cable through the passage, the wheels ensure that the end thereof is easily deflected in the direction of the passage and moves along the inner wall thereof with minimal friction. The device prevents the end of the pipe or cable from catching behind irregularities, sharp bends, or narrow sections of the passage. This is particularly relevant in applications where pipes or cables are pulled or pushed over longer distances through conduits or sleeves, such as in installation engineering, underground infrastructure, industrial cabling, or inspection applications.

The wheels are positioned such that they protrude at least 5 mm in the longitudinal direction beyond the front side and at least 5 mm beyond the radial circumference of the casing. This distance ensures that possible irregularities on the inside of the passage, such as raised edges, burr formation, or residual material, cannot make contact with the front side or the cylindrical casing of the device. Such irregularities may arise, for example, from imperfections in manufacture (such as at weld seams or mechanically milled inlets), from installation components (such as flanges with sharp transitions), or from residue that accumulates in the passage during use (such as sand, mud, scale deposits, or corrosion). By virtue of the 5 mm protrusion, the wheels act as a buffer and remain the only mechanical contact point between the end of the pipe or cable and the inner wall of the passage. As a result, the pipe or cable can be pushed through a passage in a straightforward manner, without it being necessary to use more complex methods, such as the prior threading and attachment of a separate pulling cable to the end.

The at least three wheels at the front side of the device ensure, in a structurally simple and space-efficient manner, that the wheels around the full circumference of the front side form the only contact points with the passage. Three is thereby the minimum number of wheels that permits this geometrically. This ensures that, irrespective of the orientation of the device relative to the inner wall of the passage, one or more wheels always form the only contact point with that wall, and that the cylindrical casing or front side never makes direct contact with the passage itself. In other embodiments, however, more than three wheels may also be employed, for example six wheels in a hexagonal arrangement, or a larger series of wheels around the circumference of the front side, depending on the requirements with regard to stability, load distribution, or adaptation to variable cross-sections.

The technical effect is therefore that mechanical contact with the inner wall of the passage occurs exclusively via the wheels. By virtue of the imposed minimum protrusion, the casing and the front side are kept physically at a distance from the wall of the passage. This creates a minimum clearance between these parts and the wall, even in the presence of tolerances, variations in inner diameter, or local unevenness.

Because contact is limited to individual rolling elements and not to an enclosing cylindrical surface, the operation is not dependent on a closely fitting inner diameter. The device centres itself via the wheels and can adapt to passages of different diameters without the casing being able to run up against or catch on anything.

The operation is therefore not limited to passages with circular walls. In a passage with a non-circular cross-section, for example square or rectangular, during advancement one or more wheels will always contact the wall and form a rolling support point. The minimum protrusion prevents the cylindrical casing from contacting flat walls or corners, whilst it is also prevented that the front side strikes an edge or transition before a wheel makes contact.

Furthermore, it is prevented that internal irregularities, such as weld seams, burrs, flanges, or accumulated material, come into direct contact with the casing or the front side. If a wheel contacts such an irregularity, this occurs via a rolling contact point that can move, rather than via a rigid surface that may catch.

The objective technical problem can therefore be formulated as: how can the risk of becoming lodged during passage through a passage be reduced?

CN '156 contains no indication that the extent to which the wheels protrude is of importance, nor that minimum values must be established for this purpose, nor that these minimum values should apply both relative to the radial outer circumference of the casing and relative to the front side.

As a result, the device disclosed in CN '156 does not exclude the possibility that parts of the casing, in particular the portion between adjacent wheels, still contact the inner wall of the passage. No geometric condition is imposed that ensures that only the wheels make contact.

This limits the practical applicability of the device according to CN '156 to situations in which the inner wall is sufficiently smooth and free of irregularities. If an edge, weld seam, constriction, or other protrusion is located at the level of the intermediate casing portion, this may cause direct contact and give rise to catching or blocking. CN '156 offers no solution to this risk and gives the skilled person no indication on how to dimension the wheels in such a way that such contact is structurally excluded.

The solution according to claim 1 goes further than the principle of CN '156. By stipulating that each wheel protrudes at least 30% of its diameter and at least 5 mm beyond both the radial outer circumference of the casing and the front side, a fixed geometric lower limit is imposed. Thereby, the wheels always constitute the outermost and forwardmost part of the device, and the casing and the front side cannot come into contact with the wall.

CN '156 contains no indication that such a minimal protrusion is necessary. The solution claimed in claims 1 and 14 therefore does not follow in an obvious manner from CN '156. The skilled person, starting from CN '156 and confronted with the stated problem, would not arrive at establishing such a minimum protrusion without inventive activity. Claims 1 and 14 therefore rest on an inventive step.

In a further or alternative embodiment, the wheels have a diameter of at least 17 mm, and preferably a diameter of at least 23 mm.

In a further or alternative embodiment, the wheels have a diameter of at most 50 mm, and preferably at most 40 mm, and even more preferably at most 30 mm. And even more preferably at most 27 mm.

In a further or alternative embodiment, the wheels have a maximum width of at least 3 mm, and preferably at least 6 mm, and even more preferably at least 10 mm.

In a further embodiment, the wheels have a maximum width of at most 30 mm, and preferably at most 20 mm, and even more preferably at most 15 mm.

In a further or alternative embodiment, the wheels are made of plastic. Plastic wheels reduce the risk of damage to the inner wall of the passage owing to their lower hardness and slightly resilient character.

In a further or alternative embodiment, the wheels protrude at least 35% and at most 50% of their diameter beyond the radial outer circumference of the casing and beyond the front face in the longitudinal direction. Such a configuration means that the wheels are positioned close to the edge formed by the transition between the front face of the device and the cylindrical casing. As a result, the wheels extend maximally beyond the casing without structural modifications being required to provide a shaft outside the volume of the casing. The radius of the wheels is thereby utilised to the maximum extent for guidance along the inner wall of the passage, whilst the construction remains compact and robust.

Moreover, minimising the volume of the wheels within the volume of the casing is of substantial importance in order to have sufficient space within the casing to establish a firm mechanical connection between the end of the pipe or cable and the device, without the overall dimensions of the device having to be increased. Because the wheels are situated predominantly outside the main volume, the interior of the casing remains available for accommodating a coupling device or fastening structure that allows the end of the pipe or cable to be anchored in or to the device in a secure, stable, and play-free manner. Such a connection generally requires sufficient material thickness and assembly surface, as well as space for fastening elements such as screws, clamps, or conical connections. The need for a firm connection is functionally necessary because the device is subjected to considerable forces during use, including those arising from pushing or pulling the pipe or cable through the passage, as well as radial or torsional loads that may arise when following bends or overcoming localised constrictions. If the internal space were insufficient, it would be necessary to increase the external dimensions of the device in order to nonetheless permit a sound fastening. Such an increase would, however, detract from the applicability of the device in narrow or restricted passages, where a compact construction is essential.

In a further or alternative embodiment, the wheels each protrude at least 6.5 mm beyond both the radial outer circumference of the casing and beyond the front side in the longitudinal direction. By allowing the wheels to protrude to this extent, it is ensured with greater certainty that they constitute, under all circumstances, the sole contact point between the end of the pipe or cable and the inner wall of the passage. At the same time, this configuration allows the body of the device itself to be kept further free from contact with potential obstacles or rough surfaces, which benefits the service life and reliability of the device.

In an embodiment, the front side comprises four wheels that are positioned at equal distances from one another around a circumference of the front side. Providing four wheels constitutes, in this context, the minimum required number to realise an effective shield between, on the one hand, the casing and the front side of the device and, on the other hand, the inner wall of the passage. This symmetrical positioning ensures that, regardless of the rotational or tilting position of the device within the passage, at least one wheel is always present between each segment of the front side and the inner wall. This prevents the casing or the front side from coming into direct contact with internal wall surfaces.

Furthermore, the mutual distance between the wheels, expressed as the segment of the circumference of the front side situated between two adjacent wheels, is sufficiently small to prevent typical internal structures or irregularities in the passage, such as local protrusions, weld beads, inlets for auxiliary pipes, or fastening elements, from being able to reach through the gap as far as the casing or the front face. In this way, the functional shielding around the entire circumference is maintained, even in realistic and less uniform applications. This embodiment thus combines a maximum protective effect with a minimal and efficient use of structural components.

In a further or alternative embodiment, an imaginary straight line does not touch the casing, wherein the straight line is drawn between the point of a wheel that protrudes furthest beyond the radial outer circumference of the casing and the corresponding point of an adjacent wheel. This prevents the casing from coming into contact with the inner wall of the passage, so that only the wheels make contact with the passage. An effective guidance is thereby guaranteed.

In a further embodiment, the front side comprises a cross-shaped recess, wherein the cross-shaped recess comprises four beam-shaped segments, and wherein in each of the beam-shaped segments a wheel is rotatably arranged. This specific geometry of the recess is particularly suited to integrating four wheels in the device, wherein the recess functions as a guiding channel that ensures both the correct positioning and effective shielding of the wheels. The cross-shaped structure allows each wheel to orient itself along one of the two perpendicular axes of the recess, whereby the whole achieves a symmetrical distribution around the front side such that the front side and the casing are effectively shielded around an entire circumference from the inner wall of the passage. In addition, by virtue of the construction of the cross-shaped recess, each wheel is enclosed by the walls of the corresponding beam-shaped segment, so that only those parts of the wheels that move in the same linear direction during rotation of the wheel make contact with the inner wall of the passage and possibly come into contact with obstacles or irregularities inside the passage. The remaining parts of the wheels remain protected within the recess, thereby preventing the wheels from becoming caught on the said obstacles or irregularities. A further advantage of the cross-shaped recess is that it can be manufactured in a relatively straightforward manner by means of a single milling operation.

Furthermore, the continuous character of the cross-shaped recess, wherein the central intersection is also recessed, ensures that dirt, dust, and wear debris that accumulate during the passage process are not retained in a central area between the wheels but can pass freely through the recess. This contributes to more reliable operation over prolonged use.

In a further or alternative embodiment, the minimum distance between a wheel and the adjacent side of the beam-shaped segment in which the wheel is mounted is at most 5 mm, preferably at most 3 mm, and even more preferably at most 2 mm. The purpose of limiting this gap is to prevent foreign objects, protruding elements, or loose material from being able to catch in the cross-shaped recess or accumulate between the wheel and the surrounding structure. Since the wheels are in direct contact with the inner wall of the passage, they constitute the most likely access point for dirt, sand, mud, or other residue that moves along the wall during use. If the gap between the wheel and the side wall of the segment is too large, such residue may easily penetrate into the recess and accumulate around the shaft or between the wheel and the recess, resulting in a blockage or impediment to the free rotation of the wheel. By limiting the distance to a minimum, this access possibility is greatly reduced, whilst sufficient space is provided to avoid impeding the rotation of the wheel.

In a further or alternative embodiment, the wheels are rotatably arranged around a shaft that extends between opposing sides of the beam-shaped segments. This configuration provides a secure attachment of a wheel, which is important for absorbing the forces that arise when pushing or pulling the pipe or cable through the passage. During use, the wheels may indeed be exposed to considerable axial and radial forces, for example when overcoming bends or obstructions. By securing the shaft between two opposing walls, a stable and durable support is ensured without additional reinforcements being required.

In a further or alternative embodiment, a first side of the opposing sides of a beam-shaped segment comprises a through-hole through which the shaft can be inserted, and a second side of the opposing sides of a beam-shaped segment comprises a hole, wherein a first end of the shaft lies in the through-hole and a second end of the shaft lies in the hole.

In a further embodiment, the shaft is a loose, removable element. This configuration makes it possible to mount or demount the wheels easily, for example for maintenance, replacement, or inspection. Since the shaft is not permanently fixed but is arranged with clearance in the opposing sides of the beam-shaped segment, the wheel can be removed in a straightforward manner.

Furthermore, this has the advantage that each wheel can be dismounted individually, which makes replacing a wheel considerably easier. In this application, a wheel may sustain damage quickly, and the ability to replace a damaged wheel easily is therefore particularly advantageous.

Since the wheels are retained in the open cross-shaped recess by means of a loose shaft, it is furthermore not necessary to fit a separate cover element, such as an end cap, over the wheels in order to keep them in place. The absence of such a cover element results in more free space around the wheels, so that dirt, dust, and debris can accumulate less easily and the free rotation of the wheels is less readily impeded.

In a further or alternative embodiment, the shaft can be positioned close to the edge formed by the transition between the front side and the casing, so that the shaft lies along the circumference of the front face. In this way, the protrusion of at least 35% and at most 50% of the diameter of a wheel is achieved in a straightforward manner. Moreover, this part of the beam-shaped segments is more easily accessible for mounting or demounting the wheel by virtue of its peripheral location.

In a further embodiment, the shaft comprises a first and a second end directed in a first and a second longitudinal direction respectively, wherein the shaft is removably arranged in a corresponding beam-shaped segment along the first longitudinal direction. This configuration enables a particularly straightforward removal, in that the shaft can be withdrawn by means of a linear movement in the longitudinal direction without complex operations or additional disassembly. The receiving formation required for this purpose can be realised in a straightforward manner using standard tools by means of a single, straight, transverse bore through the opposing sides of the beam-shaped segment.

Furthermore, by turning the screw, it can be positioned in front of, or alternatively away from, the first longitudinal direction of the shaft, so that the shaft is thereby either fixed in its location or not. In the screwed-in state, the screw prevents the shaft from shifting in the axial direction, whereas when the screw is turned back the shaft can be freely removed. This method requires only a simple transverse bore and a suitable screw and is therefore both straightforward to realise from a manufacturing perspective and user-friendly in operation. The system allows the shaft to be locked or released quickly and without tool-intensive interventions, which considerably increases the practical applicability in a wide variety of situations.

In a further embodiment, the screw is arranged in a notch in an edge, which edge is formed by the transition between the front side and the casing. By positioning the screw in this notch, it is avoided that the screw protrudes beyond the radial outer circumference of the casing, which is important in order to prevent the screw from catching, during use, on irregularities, edges, or protrusions on the inner wall of the passage. Furthermore, this notch can, by virtue of the cylindrical form of the casing, be realised easily using the same bore that is used to make the holes in the opposing sides of the beam-shaped segments for receiving the shaft. In this regard, the bore is oriented parallel to the circumference of the front face.

In a further or alternative embodiment, the transition between the front side and the casing forms an edge, wherein said edge is rounded. In a further embodiment, said edge has an average radius of curvature of at least 3 mm, and preferably at least 6 mm.

In a further or alternative embodiment, the screw comprises an external screw thread, wherein the diameter of the external screw thread is the maximum diameter of the screw. This allows the screw to be screwed fully into a complementary hole and prevents a screw head from protruding that could potentially catch behind irregularities in the inner wall of the passage. In addition, this makes it possible to remove the shaft by screwing the screw fully into the notch, so that the shaft can be removed without having to remove the screw. This prevents the screw from being lost.

In a further embodiment, the complementary hole is at least 2 mm deep, and preferably at least 3 mm deep.

In a further or alternative embodiment, the rear side comprises a cylindrical hollow space formed by a segment of the casing. This hollow space serves to receive the end of a pipe or cable and provides an enclosing positioning within the device. An important advantage of this configuration is that the edges of the cylindrical hollow space provide physical support to the outer side of the inserted pipe or cable, in particular during tilting movements or deviations from the axial direction. This prevents the pipe or cable from bending sharply relative to the device, which under repeated loading or high forces could lead to the loosening or breaking of the mechanical connection.

In an embodiment, the cylindrical hollow space has a depth of at least 10 mm, and preferably at least 15 mm, and even more preferably at least 22 mm. This depth provides sufficient support to a connected cable or pipe to prevent the pipe or cable from bending sharply.

In a further embodiment, the segment of the casing comprises, around a circumference, one or more openings for receiving screws. These openings make it possible to mechanically screw the end of a pipe or cable in place within the cylindrical hollow space of the device. This provides a firm and direct fastening obtained without the need for additional connecting pieces, requiring only generally available tools and screws.

In a further embodiment, the one or more openings comprise a funnel-shaped edge around their circumference so that screws of different sizes can be used without the screw head extending beyond the casing and potentially catching behind irregularities in or on the inner wall of the passage.

In a further embodiment, the segment of the casing comprises, around a circumference, at least three openings for receiving screws. This configuration offers compatibility with a wide variety of cable and pipe diameters, as well as with different material compositions of the cable or pipe. Depending on the size, wall thickness, and material of the inserted end, more or fewer screw connections can be applied, whereby the force distribution and the clamping effect can be tailored to the specific application. For rigid or thicker pipes, multiple screws at regular intervals can be used for a robust anchoring, whilst for thinner or more delicate cables a more limited number of screws may suffice in order to avoid damage. This flexibility makes the device suitable for a wide range of practical situations without the need for structural modifications.

In a further or alternative embodiment, the cross-shaped recess and the cylindrical hollow space are separated from each other by a wall. This wall prevents the end of an inserted pipe or cable from coming into contact with the wheels located in the cross-shaped recess.

In a further embodiment, the wall comprises a central opening towards a central point in the cross-shaped recess, wherein the opening has a diameter of at most 2 cm. In a further embodiment, the opening has a diameter of at most 1.5 cm, and preferably at most 1.2 cm. This limited opening makes it possible, for example, to pass through a guide wire, signal cable, or fastening element without the pipe or cable as a whole coming into contact with the wheels or other moving parts in the cross-shaped recess. The central positioning of the opening enables a rectilinear passage from the centre of the cylindrical hollow space, whilst the limited diameter ensures that the structural separation between both compartments is maintained.

In a second aspect, the invention relates to a method for passing a cable or pipe through a passage, comprising the steps of connecting a rear side of a cylindrical body to an end of a cable or pipe, wherein the device comprises at least three wheels around an outer circumference of a front side, wherein each wheel protrudes by at least 30%, and preferably at least 35%, of its diameter beyond the radial outer circumference of the casing and likewise beyond the front side in the longitudinal direction; inserting the end of the cable or pipe into a passage; pushing the cable or pipe through the passage, wherein the wheels make contact with one or more inner walls of the passage in order to deflect the cable or pipe in a direction of the passage.

This method makes it possible to push a cable or pipe through a passage with a minimum number of operations using only one device. Since the device comprises at least three wheels that protrude by at least 30%, and preferably at least 35%, of their diameter beyond the radial outer circumference of the casing and likewise beyond the front side, it is ensured that the wheels serve as the sole contact points with the inner wall of the passage. As a result, the cable or pipe is automatically deflected in the direction of the passage when being pushed, with minimal friction. The method does not require additional aids such as pulling cables or guiding systems. By virtue of simpler operations and guidance with minimal friction, the method is more user-friendly.

In an embodiment, at the step of connecting the rear side of the cylindrical body to the end of the cable or pipe, the cable or pipe is inserted into a cylindrical cavity at the rear side, and the method further comprises the steps of securing the cable or pipe in the cylindrical cavity by inserting a screw through an opening in a segment of the casing that forms the cylindrical cavity, and anchoring the screw in the cable or pipe. This embodiment provides a simple and universal way of connecting the device to a cable or pipe. This method does not require a special fastening system and can be carried out with commonly available tools, such as a drill. Moreover, this method is applicable to cables and pipes of a wide variety of materials (such as various plastics or rubbers) and diameters.

It is assumed that the present invention is not limited to the embodiments described above and that certain modifications or changes may be made to the described examples without requiring amendment of the appended claims. For example, the present invention has been described with reference to a pipe or cable, but it will be clear that the invention can be applied to similar elements to be passed through a passage.

In what follows, the invention is described by means of non-limiting examples that illustrate the invention and are neither intended nor to be interpreted as limiting the scope of the invention.

### EXAMPLES

### EXAMPLE 1

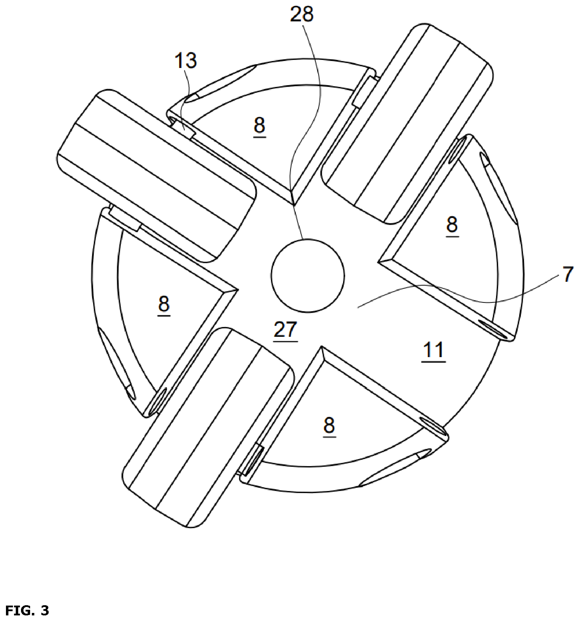

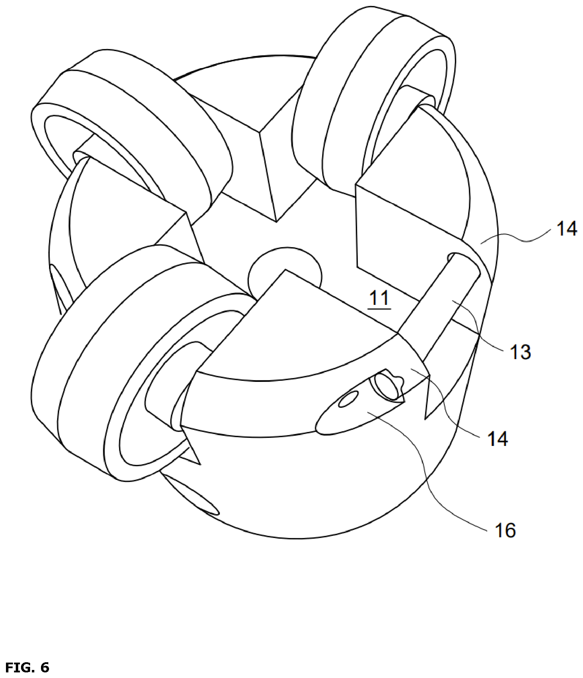

To clearly show the entire device, a wheel (12) and the corresponding shaft are not shown in FIG. 3-5. In FIG. 6, only one wheel is not shown.

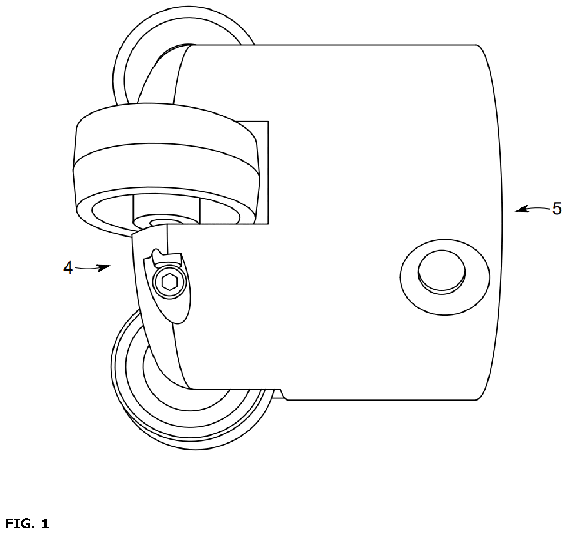

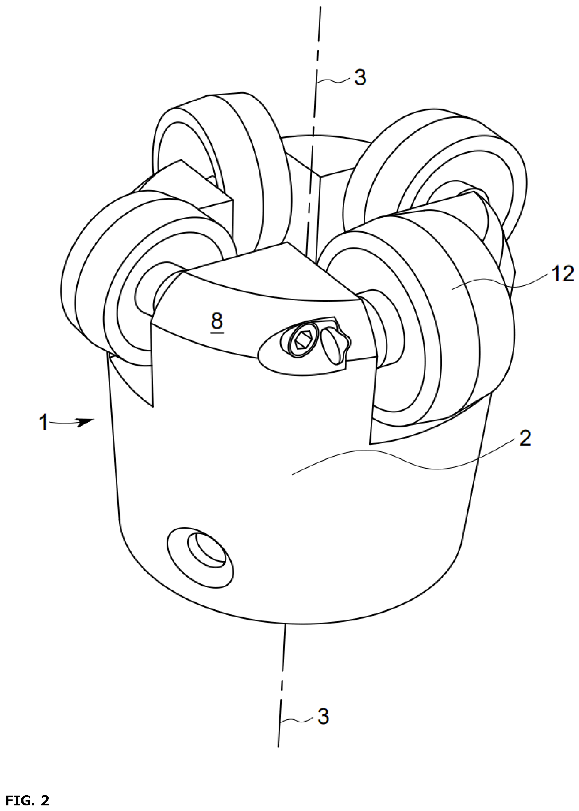

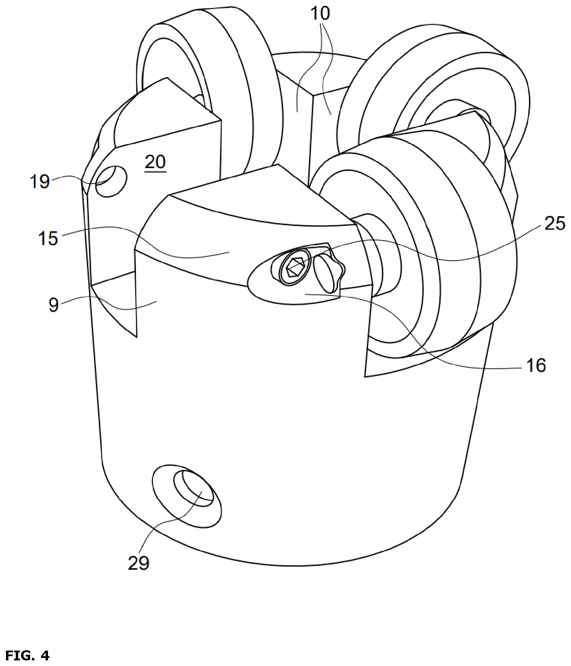

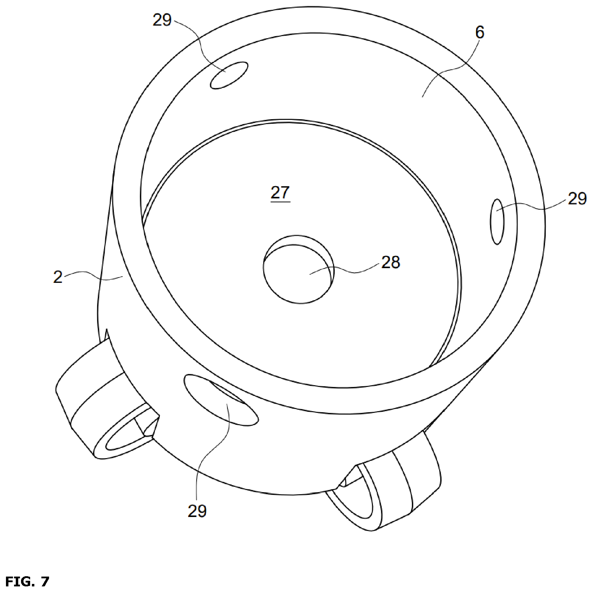

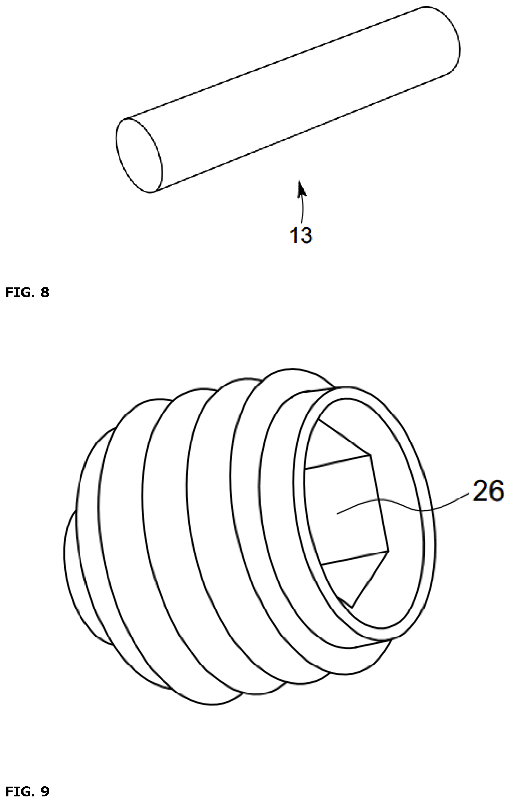

FIG. 1 shows a side view of the device. FIG. 2 shows a perspective view of the device. The device comprises a predominantly cylindrical, hollow body (1) formed by a casing (2) extending between a front side (4) and a rear side (5), wherein the casing (2) is coaxial with a longitudinal axis (3). The rear side (5) is open and thereby provides access to a cylindrical hollow inner space (6), defined by a part of the casing (2). The rear side (6) of the device is shown in FIG. 7. The front side (4) is provided with a cross-shaped recess (7), formed by two intersecting beam-shaped grooves that run completely through the front side (4). This is shown in a front view of the device depicted in FIG. 3. This recess (7) divides the front side (4) of the body (1) into four protruding quadrants (8). Each quadrant (8) comprises a curved peripheral side (9), which forms a segment of the casing (2), and two perpendicular sides (10) that are perpendicular to one another and oriented perpendicularly to the front side (4). The four front sides of the four quadrants form the front side (4) of the predominantly hollow body (1). This is indicated in the perspective view of the device depicted in FIG. 4. The mutually facing sides of adjacent quadrants (8) each define one of the four beam-shaped segments (11) of the cross-shaped recess (7). In each of these beam-shaped segments (11), a wheel (12) is rotatably mounted on a shaft (13), wherein the shaft (13) is arranged between said mutually facing sides at the peripheral end (14) of the beam-shaped segments (11). By virtue of the peripheral position of the shaft (13), each wheel (12) extends both in the longitudinal direction beyond the front side (4) and in the radial direction beyond the casing (2). The shaft is shown in FIG. 8.

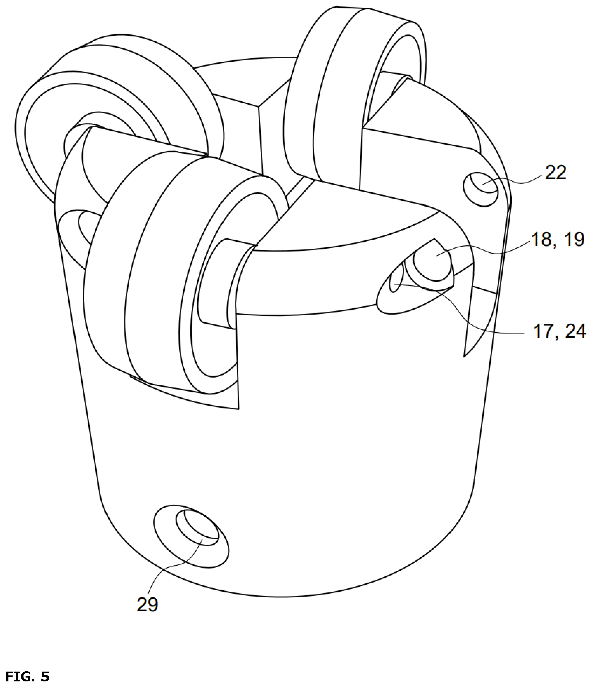

Each front side (4) of the four quadrants (8) transitions with a rounded edge (15) to the corresponding peripheral side (9) that forms a part of the casing (2). In this edge (15), a notch (16) is provided whose shape forms an impression of a part of a cylinder. This is indicated in the perspective view of the device shown in FIG. 5. By virtue of the axial curvature of the rounded edge (15), the notch (16) comprises one curved side (17) and one flat side (18). The notch (16) is oriented and positioned such that this flat side (18) lies parallel to and in the vicinity of one of the two perpendicular sides (10) of the corresponding quadrant (8). In this flat side (18), a through-hole (19) is formed towards the adjacent perpendicular side (20). In the perpendicular side (21) opposite the adjacent perpendicular side (20), a hole (22) is provided which mirrors said through-hole (19). Through the through-hole (19) and into the hole (22), the shaft (13) is placed, around which a wheel (12) is rotatably arranged. In this arrangement, the shaft (13) is a loose segment that is provided with some clearance through the through-hole (19) and into the hole (22), whereby it can be easily removed. This is shown in FIG. 6. In this manner, a wheel (12) is provided in each beam-shaped segment (11).

In the curved side (17) of the notch (16), a screw hole (24) is provided which comprises a complementary screw (25). This screw (25) can be unscrewed from the opening so that it extends to in front of the through-hole (19) and blocks it against the removal or insertion of a shaft (23). The screw (25) is substantially cylindrical, wherein a notch (26) in the cylindrical volume of the screw (25) forms a profile for engagement with a tool. This allows the screw (25) to be brought fully into the hole. The screw (25) is shown in FIG. 9.

The cylindrical hollow inner space (6) is separated from the four quadrants (8) by a partition wall (27). This partition wall comprises a through-opening (28) towards the cross-shaped recess (7). This through-opening is provided at a centre point of the partition wall (27) and coincides with a centre point of the cross-shaped recess (7).

The segment of the casing (2) that defines the cylindrical hollow inner space (6) comprises a plurality of screw openings (29) around its circumference. In the present embodiment, there are three, which are provided at equal distances from one another around the circumference. Each opening (29) is surrounded on the outer side of the casing (2) by a funnel-shaped edge. This edge is of conical construction and tapers gradually from a larger outer diameter to the smaller diameter of the screw opening (29) itself, thereby forming a recessed inlet. This funnel-shaped form allows screws with a variety of head forms, such as flat or dome-headed screws, to be placed in the opening (29) without protruding beyond the outer diameter of the casing (2). As a result, the outer contour of the device remains free of protruding parts.

The cylindrical hollow body has an outer diameter of 55 mm and a total width of 70 mm when the radially protruding wheels are taken into account. The wheels each protrude 7.5 mm beyond the casing in the radial direction. The height of the cylindrical body is 57.5 mm, including the wheels which each protrude 7.5 mm beyond the front side in the longitudinal direction. The height of the cylindrical hollow body alone, without wheels, is 50 mm. The cylindrical hollow inner space has a depth of 26 mm and an inner diameter of 48 mm. The cross-shaped recess at the front side has a depth of 19 mm, wherein each beam-shaped segment has a width of 15 mm.

### EXAMPLE 2

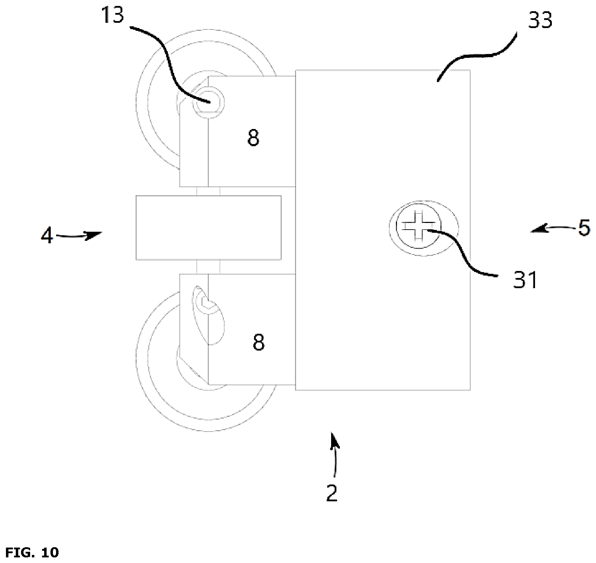

FIG. 10-13 show a further embodiment of the device.

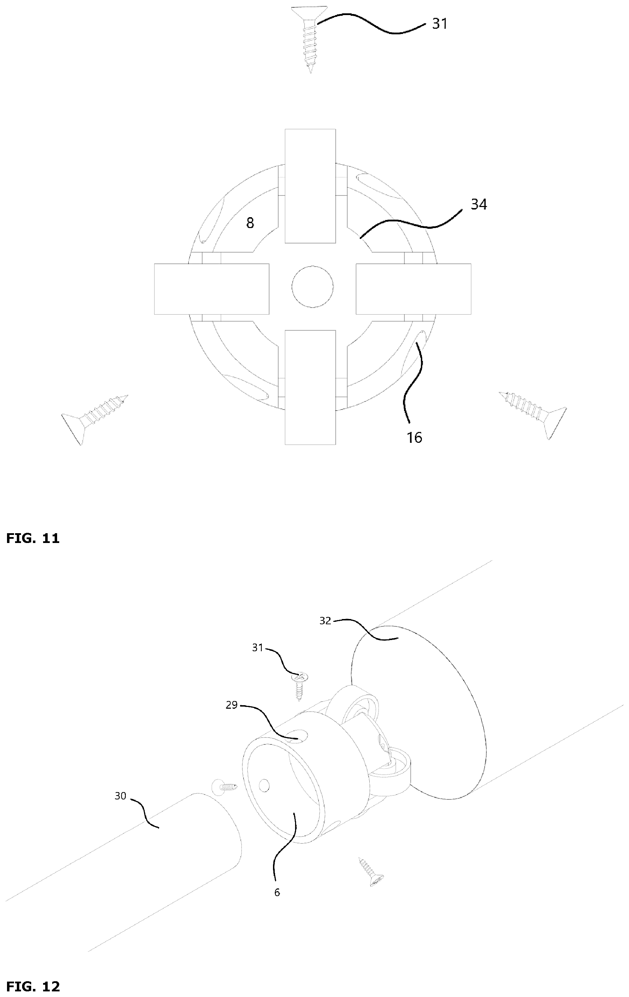

A side view and a front view of the device according to this embodiment are shown in FIG. 10 and FIG. 11, respectively. The present embodiment differs from the first example in that the quadrants (2) are positioned slightly radially inward relative to the segment of the casing (33) that defines the hollow inner space (6). Furthermore, a screw (31) is shown in FIG. 10 in the opening (29). This screw (31) is suitable for securing a cable or pipe in the hollow inner space (6). In a comparable manner, a cable or pipe can be secured in the embodiment of the device shown in the first example.

The present embodiment differs in a second aspect from the first example, namely in that the edge formed by the connection between the perpendicular sides (10) of the quadrants (8) is a rounded edge (34). Furthermore, the three screws (31) shown in FIG. 11 indicate the locations in the casing where the openings (29) are situated, and by means of which a pipe or cable can be secured in the device.

The present embodiment may, apart from the two differences described above, be identical to the embodiment of the device described in the first example. Alternatively, the present embodiment may also comprise further differences.

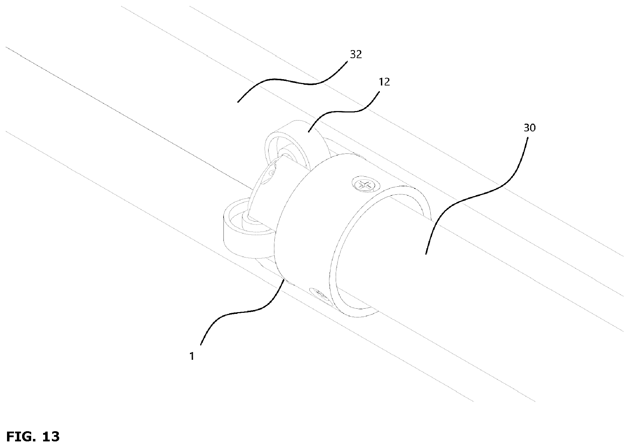

FIG. 12 illustrates a use of the device. A pipe or cable (30) is inserted into the hollow inner space (6) and secured by means of three screws (31) through the openings (29). The device with cable or pipe can then be inserted into the passage (32). When the device is located in the passage (32), the wheels (12) form the contact with the inner wall(s) of the passage (32), as shown in FIG. 13. By pushing the cable or pipe (30) at the entrance of the passage, the end of the cable or pipe is guided through the passage by means of the device - and more specifically by means of the wheels (12) of the device.

## Claims

1. A device, comprising a substantially cylindrical casing extending between a front side and a rear side along a longitudinal direction, wherein the rear side is configured for connecting to an end of a pipe or cable, and wherein the front side is provided with at least three wheels, wherein each wheel protrudes at least 30% of its diameter and at least 5 mm beyond the radial outer circumference of the casing and also beyond the front side in the longitudinal direction.

2. The device according to claim 1, wherein each wheel protrudes at least 35% and at most 50% of its diameter beyond the radial outer circumference of the casing and also beyond the front side in the longitudinal direction.

3. The device according to claim 1 or 2, wherein the front side comprises four wheels positioned at equal distances from one another around a circumference of the front side.

4. The device according to claim 3, wherein the front side comprises a cross-shaped recess, wherein the cross-shaped recess comprises four beam-shaped segments, and wherein in each of the beam-shaped segments a wheel is rotatably arranged.

5. The device according to claim 4, wherein the wheels are rotatably arranged around a shaft extending between opposing sides of the beam-shaped segments.

6. The device according to claim 5, wherein the shaft is a loose, removable element.

7. The device according to claim 6, wherein the shaft comprises a first and a second end directed in respectively a first and a second longitudinal direction, wherein the shaft is removably arranged in a corresponding beam-shaped segment along the first longitudinal direction.

8. The device according to claim 7, wherein a screw is provided in the vicinity of the first end of the shaft, oriented perpendicularly with respect to the first longitudinal direction, and wherein the screw is adjustable in position by means of rotation to in front of the first end of the shaft so as to block movement of the shaft in the first longitudinal direction.

9. The device according to claim 8, wherein the screw is provided in a notch in an edge, which edge is formed by the transition between the front side and the casing.

10. The device according to any one of claims 1 - 9, wherein the rear side comprises a cylindrical hollow space which is formed by a segment of the casing.

11. The device according to claim 10, wherein the segment of the casing comprises one or more openings around a circumference for receiving screws.

12. The device according to any one of claims 1 - 11, wherein the cross-shaped recess and the cylindrical hollow space are separated by a wall.

13. The device according to claim 12, wherein the wall comprises a central opening towards a central point in the cross-shaped recess, wherein the opening has a diameter of at most 2 cm.

14. A method for passing a cable or pipe through a passage, comprising the steps of:
- connecting a rear side of a cylindrical body to an end of a cable or pipe, wherein the device comprises at least three wheels around an outer circumference of a front side, wherein each wheel protrudes at least 30% of its diameter and at least 5 mm beyond the radial outer circumference of the casing and also beyond the front side in the longitudinal direction;
- inserting the end of the cable or pipe into a passage;
- pushing the cable or pipe through the passage, wherein the wheels make contact with one or more inner walls of the passage so as to deflect the cable or pipe in a direction of the passage.

15. The method according to claim 14, wherein, upon connecting the rear side of the cylindrical body to the end of the cable or pipe, the cable or pipe is inserted into a cylindrical cavity at the rear side, and wherein the method further comprises the steps of securing the cable or pipe in the cylindrical cavity by inserting a screw through an opening in a segment of the casing that forms the cylindrical cavity, and anchoring the screw in the cable or pipe.
